# FASCICULE DE BREVET EUROPEEN

(11) **EP 4 031 349 B1**
(45) Date de publication et mention de la délivrance du brevet: **30.08.2023**
(21) Numéro de dépôt: 20771883.4
(22) Date de dépôt: 18.09.2020
(51) Int. Cl.: B29C 49/56, B29C 49/06, B29C 33/26, H01F 1/00, B29C 49/58

(54) **UNITE DE MOULAGE A DISPOSITIF BISTABLE MAGNETIQUE**
BISTABILE MAGNETISCHE VORRICHTUNG FÜR EINE FORMEINHEIT
MOLDING UNIT WITH A BISTABLE MAGNETIC DEVICE

(30) Priorité: 19.09.2019 FR 1910316
(43) Date de publication de la demande: 27.07.2022
(60) Demande divisionnaire: 22204320.0
(73) Titulaire: Sidel Participations, 76930 Octeville-sur-Mer (FR)
(72) Inventeur: HELLOUIN, Damien, 76930 Octeville-sur-mer (FR); FEVRE, Sébastien, 76930 OCTEVILLE SUR MER (FR)
(74) Mandataire: Sidel Group
(86) Numéro de dépôt international: PCT/EP2020/076102
(87) Numéro de publication internationale: WO 2021/053140

(56) Documents cités:
- EP-A1- 2 740 582
- EP-A1- 3 431 253
- WO-A2-2015/136368
- DE-A1-102013 111 948
- FR-A1- 2 863 930
- FR-B1- 2 863 930
- RU-A- 2002 104 113

## Description

### Domaine technique de l'invention

L'invention se rapporte au domaine des unités de moulage de récipients, notamment par soufflage de préformes en matériau thermoplastique, qui comportent deux supports de moule qui sont destinés à porter chacun une partie d'un moule et qui sont montés mobiles l'un par rapport à l'autre entre une position ouverte et une position fermée dans laquelle ils sont susceptibles d'être verrouillés par un dispositif de verrouillage. L'unité de moulage est plus particulièrement équipée d'un dispositif bistable qui permet de forcer le dispositif de verrouillage vers sa position verrouillée ou vers sa position déverrouillée correspondant à chacune de ses positions extrêmes stables.

### Arrière-plan technique

L'invention concerne une unité de moulage destinée à équiper une station de formage de récipients en matériau thermoplastique en grandes séries. Dans une telle station, des préformes chaudes sont conformées en récipients finaux par soufflage dans des moules. De manière connue, chaque moule est réalisé en au moins deux parties qui sont susceptibles d'être jointes pour reconstituer une empreinte complète du récipient à produire.

Chaque moule est monté dans une unité de moulage associée. Pour permettre de produire des récipients de modèles différents, chaque partie de moule est fixée de manière démontable dans un support de moule associé de l'unité de moulage. Les supports de moule sont mobiles l'un par rapport à l'autre entre une position ouverte, dans laquelle les deux parties de moules sont écartées, et une position fermée, dans laquelle les deux parties de moule sont jointes. Lorsqu'on souhaite changer de modèle de récipient, il suffit de démonter les moules actuels des supports de moule pour les remplacer par de nouveaux moules.

Pour permettre la réalisation de récipients en grandes séries, plusieurs unités de moulage sont portées à la périphérie d'un carrousel rotatif qui tourne en continu. Les préformes sont reçues dans les moules en un point d'entrée déterminé, tandis que les récipients sont extraits des moules en un point de sortie déterminé. Pour permettre l'insertion d'une nouvelle préforme et l'extraction d'un récipient fini, les supports de moule sont commandés dans leur position ouverte. Ainsi, durant leur trajet sur un secteur angulaire s'étendant depuis le point de sortie jusqu'au point d'entrée, les moules sont maintenus en position ouverte.

Les préformes sont conformées en récipients dans les unités de moulage par soufflage ou étirage-soufflage durant leur transport depuis le point d'entrée jusqu'au point de sortie. Durant tout leur trajet depuis le point d'entrée jusqu'au point de sortie, il est impératif que les supports de moule occupent une position fermée dans laquelle les deux parties de moule sont jointes.

En effet, pour éviter d'endommager les moules lors de leur fermeture, au moins l'une des deux parties de moule est montée flottante avec un jeu limité sur son support de moule. Pendant le soufflage, un fluide comprimé à la même pression que le fluide de soufflage, par exemple 40 bars, est injecté dans une chambre de compensation comprise entre le support de moule et la partie de moule flottante pour plaquer cette dernière contre l'autre partie de moule. Ceci permet d'obtenir des récipients avec un plan de joint peu visible.

Or, si les supports de moule ne sont pas maintenus dans leur position fermée au moment où le fluide sous pression est injecté dans la chambre de compensation, la partie de moule flottante est poussée par la pression avec une force suffisante pour arracher ses moyens de fixation sur le support de moule. La partie de moule peut ainsi être éjectée. Une telle partie de moule peut peser jusqu'à plusieurs dizaines de kilogrammes. L'éjection de la partie de moule risque ainsi de provoquer des dommages conséquents à la station de formage et de mettre en danger l'intégrité physique des opérateurs humains situés à proximité.

Pour garantir que les deux parties de moule soient bien jointes sans provoquer l'ouverture des supports de moule, ces derniers sont verrouillés en position fermée par un dispositif de verrouillage commandé. Le dispositif de verrouillage comporte un organe de verrouillage qui est monté mobile sur l'un des support de moule entre une position verrouillée dans laquelle il coopère avec une face de blocage de l'autre des supports de moule pour empêcher l'ouverture des supports de moule et une position déverrouillée dans laquelle l'organe de verrouillage est escamoté par rapport à la face de blocage pour autoriser l'ouverture des supports de moule.

Les déplacements de l'organe de verrouillage entre ses deux positions verrouillée et déverrouillée sont généralement commandés au moyen d'un dispositif de commande à came. Une came est agencée de manière fixe sur une base fixe sur laquelle le carrousel est monté rotatif, tandis que le support de moule équipé de l'organe de verrouillage comporte un suiveur de came qui est lié à l'organe de verrouillage et qui commande les déplacements de l'organe de verrouillage par coopération avec la came.

Pour garantir le bon fonctionnement de l'unité de moulage, il est important de s'assurer que l'organe de verrouillage est correctement commandé dans l'une ou l'autre de ses positions verrouillée ou déverrouillée et qu'il ne reste pas coincé dans une position intermédiaire qui ne permettrait pas son ouverture ou sa fermeture correcte.

A cet effet, il est déjà connu d'équiper une telle unité de moulage avec un dispositif bistable muni de deux positions stables correspondant aux positions verrouillée et déverrouillée de l'organe de verrouillage, une telle unité de moulage étant notamment décrite dans le document FR2863930. Le dispositif bistable force ainsi l'organe de verrouillage vers l'une ou l'autre de ses positions verrouillée ou déverrouillée lorsque l'organe de verrouillage occupe une position intermédiaire. La position stable vers laquelle l'organe de verrouillage est poussé dépend de sa position par rapport à une position d'équilibre instable du dispositif bistable.

Les dispositifs bistables connus fonctionnent par contact mécanique en un élément monté mobile sur le support de moule et lié en mouvement avec l'organe de verrouillage, et un élément fixe. L'élément mobile est muni d'une came. Le support de moule porte l'élément fixe qui est formé d'un suiveur de came comportant un galet qui est contraint élastiquement vers la came de l'élément mobile. Le profil de la came est conçu pour que l'effort appliqué par le suiveur de came sur la came pousse l'élément mobile vers l'une ou l'autre de ses positions stables.

Un tel dispositif bistable doit appliquer un effort de maintien suffisant pour maintenir l'élément mobile dans chacune de ses positions stables pour empêcher tout déplacement intempestif de l'organe de verrouillage, notamment sous l'effet de la gravité ou d'une force centrifuge. Le dispositif de commande à came de l'organe de verrouillage est en revanche conçu pour surmonter l'effort de maintien et commander ainsi l'organe de verrouillage vers son autre position stable.

Un tel dispositif avec contact mécanique remplit son rôle de manière tout à fait satisfaisante. Cependant, il nécessite des opérations de maintenance régulières, notamment pour graisser le galet et les éléments mobiles du suiveur de came, ou encore pour remplacer les éléments en contacts les uns avec les autres qui sont sujet à usure.

De telles opérations de maintenance doivent être opérées fréquemment, par exemple environ une fois par semaine. Elles durent environ 15 minutes par unité de moulage. Or une station de soufflage comporte généralement plusieurs unités de moulage. l'installation pendant plusieurs heures et/ou de requérir l'intervention de plusieurs opérateurs.

Il existe donc un besoin pour réduire le temps et/ou la main d'oeuvre pour entretenir le dispositif bistable de chaque unité de moulage.

### Résumé de l'invention

L'invention propose une station de formage de récipients en matériau thermoplastique qui comporte :
- une unité de moulage de récipients, notamment par soufflage de préformes :
- un premier support de moule et un deuxième support de moule qui sont destinés à porter chacun une partie d'un moule, les supports de moule étant montés mobiles l'un par rapport à l'autre entre une position ouverte dans laquelle ils sont écartés l'un de l'autre, et une position fermée dans laquelle ils sont joints ;
- un dispositif de verrouillage des supports de moule en position fermée qui comporte au moins un organe de verrouillage monté mobile sur le deuxième support de moule entre une position verrouillée dans laquelle il coopère avec au moins une face de blocage du premier support de moule pour empêcher l'ouverture des supports de moule et une position déverrouillée dans laquelle l'organe de verrouillage est escamoté par rapport à la face de blocage pour autoriser l'ouverture des supports de moule ;
- un dispositif bistable qui comporte :
   -- un premier élément fixe par rapport au deuxième support de moule,
   -- un deuxième élément mobile qui est monté mobile sur le deuxième support de moule entre deux positions extrêmes stables situées de part et d'autre d'une position intermédiaire d'équilibre instable, et qui est lié en déplacement avec l'organe de verrouillage, l'élément mobile interagissant avec l'élément fixe pour forcer le dispositif de verrouillage vers sa position verrouillée ou vers sa position déverrouillée correspondant à chacune de ses positions extrêmes stables.

La station de formage est caractérisée en ce que l'élément mobile comporte un premier dipôle magnétique, dit dipôle magnétique mobile, et l'élément fixe comporte au moins un deuxième dipôle magnétique, dit dipôle magnétique fixe, le dipôle magnétique fixe exerçant une force magnétique à distance sur le dipôle magnétique mobile pour forcer l'élément mobile vers l'une ou l'autre des positions extrêmes stables quelle que soit sa position entre ses deux positions extrêmes stables.

La station de formage peut avantageusement présenter l'une ou plusieurs des caractéristiques suivantes concernant la station de formage, prises séparément ou en combinaison :
- les déplacements de l'élément mobile sont arrêtés dans ses deux positions extrêmes stables par des butées mécaniques associées, la force de répulsion exercée par chaque dipôle magnétique fixe sur chaque dipôle magnétique mobile étant suffisante pour maintenir l'organe de verrouillage dans sa position verrouillée ou déverrouillée correspondant à l'une ou l'autre des positions extrêmes stables de l'élément mobile ;
- l'élément mobile est monté coulissant sur le deuxième support de moule entre ses deux positions extrêmes stables le long d'une trajectoire rectiligne ;
- l'élément mobile est monté pivotant sur le deuxième support de moule entre ses deux positions extrêmes stables autour d'un axe de pivotement, le dipôle magnétique mobile étant fixé sur l'élément mobile de manière excentrée par rapport à l'axe de pivotement ;

La station de formage peut avantageusement présenter l'une ou plusieurs des caractéristiques suivantes concernant le dipôle magnétique :
- le dipôle magnétique fixe agit par répulsion magnétique sur le dipôle magnétique mobile en exerçant sur lui une force de répulsion pour pousser l'élément mobile vers l'une ou l'autre de ses deux positions extrêmes stables ;
- des dipôles magnétiques émet constamment un champ magnétique, tel un aimant permanent ;
- la variation de la force de répulsion en fonction de la position de l'élément mobile présente une pente qui relie deux extrema de signes opposés, le au moins un dipôle magnétique fixe étant conçu pour que la norme de la force exercée sur l'au moins un dipôle magnétique mobile soit comprise entre 30 N et 100 N, par exemple égale à environ 60 N, dans chacune de ses deux positions extrêmes stables ;
- les dipôles magnétiques fixes et mobiles sont conçus pour que la norme de la force exercée sur l'au moins un dipôle magnétique mobile soit égale à son extremum local dans chacune de ses deux positions extrêmes stables ;
- chaque dipôle magnétique fixe présente un axe polaire orienté orthogonalement à la trajectoire de l'élément fixe, l'un des pôles, dit pôle actif, de chaque dipôle magnétique fixe étant agencé en vis-à-vis de la trajectoire du dipôle magnétique mobile ;
- l'élément fixe comporte plusieurs dipôles magnétiques fixes, tous les dipôles magnétiques fixes présentant un pôle actif de même polarité ;
- chaque dipôle magnétique mobile présente un axe polaire orienté dans la direction de sa trajectoire, chaque dipôle magnétique mobile présentant un pôle dit "pôle de répulsion" qui présente la même polarité que le pôle actif des dipôles magnétiques fixes, les pôles de répulsion passant en vis-à-vis des pôles actifs lorsque l'élément mobile occupe une position intermédiaire entre ses deux positions extrêmes stables.
- chaque dipôle magnétique fixe présente un axe polaire orienté parallèlement à la trajectoire de l'élément mobile ;
- chaque dipôle magnétique mobile présente un axe polaire orienté orthogonalement à sa trajectoire de manière qu'au moins un pôle de répulsion de chaque dipôle magnétique mobile soit agencé en vis-à-vis d'un pôle actif de même polarité d'un dipôle magnétique fixe lors du déplacement de l'élément mobile entre ses deux positions extrêmes stables ;
- chaque dipôle magnétique mobile présente un axe polaire orienté parallèlement à sa trajectoire, la polarité du dipôle magnétique mobile étant inversée par rapport à la polarité du dipôle magnétique fixe ;
- au moins l'un parmi le dipôle magnétique mobile et le dipôle magnétique fixe présente une forme tubulaire dont l'axe principal coïncide avec son axe polaire pour recevoir l'autre desdits dipôles magnétiques concentriquement lorsque l'élément mobile occupe sa position d'équilibre instable ;

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig. 1] La figure 1 est une vue de dessus qui représente schématiquement une station de formage embarquant des unités de moulage réalisées selon les enseignements de l'invention ;
[Fig. 2] [Fig 2A] [Fig 2B] La figure 2, 2A, 2B, est une vue en coupe selon le plan de coupe 2-2 de la figure 1 qui représente une unité de moulage de la station de formage, ainsi que la position de soufflage et la position escamotée du dispositif de soufflage ;
[Fig. 3] La figure 3 est une vue de dessus qui représente une unité de moulage de la station de formage dans laquelle les supports de moule sont dans une position fermée ;
[Fig. 4] La figure 4 est une vue similaire à celle de la figure 3 dans laquelle les supports de moule sont dans une position ouverte ;
[Fig. 5] La figure 5 est une vue de côté qui représente les supports de moule de la figure 4 en position ouverte, un dispositif de verrouillage de l'unité de moulage étant en position déverrouillée, l'unité de moulage étant équipée d'un dispositif bistable qui force le dispositif de verrouillage dans une position verrouillée ou dans une position déverrouillée par interaction magnétique entre au moins un dipôle mobile et au moins un dipôle fixe ;
[Fig. 6] La figure 6 est une vue similaire à celle de la figure 5 dans laquelle les supports de moule sont en position fermée, le dispositif de verrouillage occupant une position verrouillée ;
[Fig. 7] La figure 7 est un diagramme qui représente la variation de la force de répulsion appliquée par les dipôles fixes du dispositif bistable sur un dipôle mobile en fonction de la position du dipôle mobile par rapport aux dipôles fixes ;
[Fig. 8] La figure 8 est une vue en coupe axiale à plus grande échelle qui représente un premier mode de réalisation dispositif bistable de la figure 5 dans une première position extrême stable correspondant à une position verrouillée du dispositif de verrouillage ;
[Fig. 9] La figure 9 est une vue similaire à celle de la figure 8 qui représente le dispositif bistable dans une deuxième position extrême stable correspondant à une position déverrouillée du dispositif de verrouillage ;
[Fig. 10] La figure 10 est une vue en coupe transversale selon le plan de coupe 10-10 de la figure 11 ;
[Fig. 11] La figure 11 est une vue similaire à celle de la figure 8 qui représente le dispositif bistable dans une position intermédiaire d'équilibre instable correspondant à une position intermédiaire du dispositif de verrouillage ;
[Fig. 12] La figure 12 est une vue similaire à celle de la figure 8 qui représente un deuxième mode de réalisation du dispositif bistable dans une position d'équilibre instable ;
[Fig. 13] La figure 13 est une vue en coupe transversale selon le plan de coupe 13-13 de la figure 12 ;
[Fig. 14] La figure 14 est une vue similaire à celle de la figure 12 qui représente une variante de réalisation du deuxième mode de réalisation du dispositif bistable ;
[Fig. 15] La figure 15 est une vue en coupe transversale selon le plan de coupe 15-15 de la figure 14 ;
[Fig. 16] La figure 16 est une vue similaire à celle de la figure 8 qui représente un troisième mode de réalisation du dispositif bistable, le dispositif bistable occupant une première position extrême stable correspondant à une position verrouillée du dispositif de verrouillage ;
[Fig. 17] La figure 17 est une vue similaire à celle de la figure 16 dans laquelle le dispositif bistable occupe une deuxième position extrême stable correspondant à une position déverrouillée du dispositif de verrouillage ;
[Fig. 18] La figure 18 est une vue en coupe transversale selon le plan de coupe 18-18 de la figure 17 ;
[Fig. 19] La figure 19 est une vue de face qui représente une unité de moulage comportant un dispositif bistable réalisé selon un quatrième mode de réalisation de l'invention, le dispositif bistable occupant une première position extrême stable correspondant à une position verrouillée du dispositif de verrouillage ;
[Fig. 20] La figure 20 est une vue similaire à celle de la figure 19 dans laquelle le dispositif bistable occupe une deuxième position extrême stable correspondant à une position déverrouillée du dispositif de verrouillage ;
[Fig. 21] La figure 21 est une vue en coupe selon le plan de coupe 21-21 de la figure 19 qui représente la position du dipôle mobile par rapport au dipôle fixe dans la première position extrême stable ;
[Fig. 22] La figure 22 est une vue en coupe selon le plan de coupe 22-22 de la figure 20 qui représente la position du dipôle mobile par rapport au dipôle fixe dans la deuxième position extrême stable.

### Description détaillée de l'invention

Dans la suite de la description, des éléments présentant une structure identique ou des fonctions analogues seront désignés par une même référence.

Dans la suite de la description, on adoptera, à titre non limitatif et à titre de repère géométrique local pour chaque unité de moulage, des orientations :
- longitudinale "L" dirigée d'arrière en avant orthogonalement aux faces de joints du moule en position jointe ;
- verticale "V" dirigée de bas en haut parallèlement à l'axe de la charnière des supports de moule ;
- transversale "T" dirigée de gauche à droite, parallèlement au plan de joint du moule en position jointe.

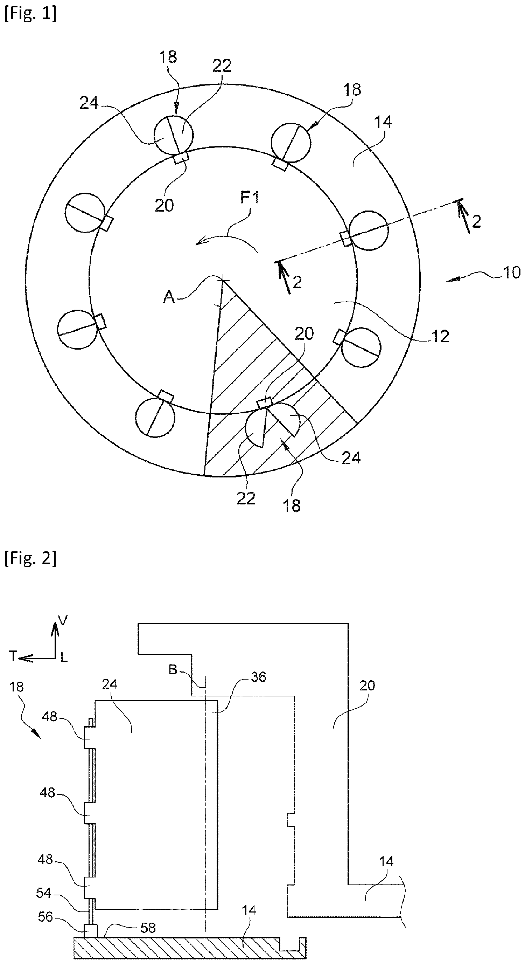

On a représenté de manière schématique à la figure 1 une station 10 de formage de récipients en matériau thermoplastique, notamment en polyéthylène téréphtalate (PET), par soufflage de préformes chaudes. Cette station 10 de formage est destinée à faire partie d'une installation de fabrication de récipients en grandes séries. Une telle installation comporte par exemple, outre la station 10 de formage, une station de chauffage de préformes froides.

La station 10 de formage comporte un carrousel 12 monté rotatif autour d'un axe "A" vertical sur une base 14 fixe par rapport au sol. Le carrousel 12 est ici entraîné en rotation continue dans un sens antihoraire, comme indiqué par la flèche "F1", par un moteur (non représenté). Le moteur tourne à une vitesse très élevée de manière que la station de formage soit susceptible de produire au moins environ 2500 récipients par heure.

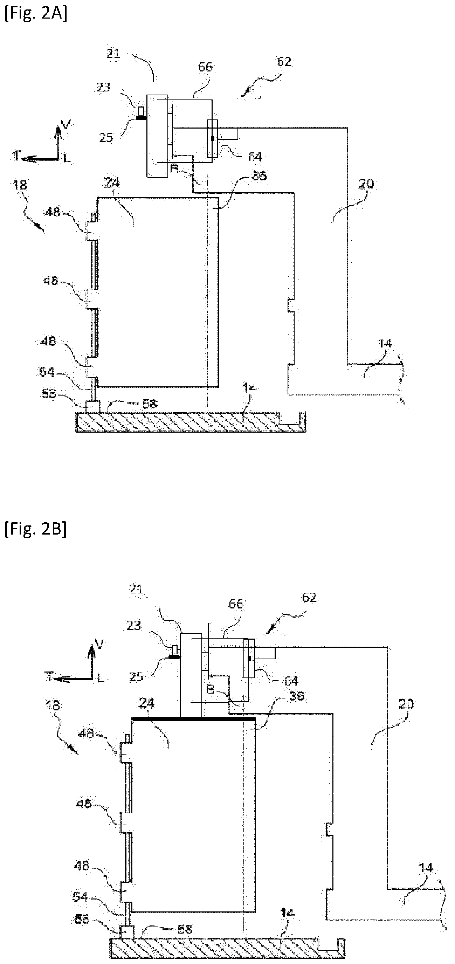

Plusieurs unités 18 de moulage sont portées par le carrousel 12. Les unités 18 de moulage sont réparties régulièrement à la périphérie du carrousel 12. Chaque unité 18 de moulage est équipée de moyens individuels de moulage d'un récipient. Chaque unité 18 de moulage est ici portée par une potence 20 fixée au carrousel 12, comme cela est illustré à la figure 2.

La potence 20 porte un dispositif 21 de soufflage.

Comme représenté sur les figures 2, chaque potence 20 comprend un dispositif 21 de soufflage aussi appelé tuyère. Ce dispositif 21 de soufflage est mobile notamment en translation par rapport à la potence 20 entre deux positions extrêmes stables, une position de soufflage (comme représenté sur la figure 2B) où le dispositif de soufflage est en appui contre une surface supérieure du moule pour alimenter en air la préforme et une position escamotée (comme représenté sur la figure 2A) permettant l'introduction de la préforme ou l'extraction du récipient. Le dispositif 21 de soufflage est lié à la potence 20 grâce notamment à un rail de guide linéaire. Le mouvement entre la potence et le dispositif de soufflage est assuré par un mécanisme galet 23 et came 25.

Pour assurer un positionnement précis dans la direction verticale du dispositif 21 soufflage, un dispositif 62 bistable qui comporte :
-- un premier élément 64 fixe par rapport à ladite potence 20,
-- un deuxième élément 66 mobile qui est lié au dispositif 21 de soufflage entre deux positions P1, P2 extrêmes stables situées de part et d'autre d'une position P0 intermédiaire d'équilibre instable, et qui est lié en déplacement avec le dispositif 21 de soufflage, l'élément 66 mobile interagissant avec l'élément 64 fixe pour forcer le dispositif 21 de soufflage vers sa position de soufflage ou vers sa position escamotée correspondant à chacune de ses positions P1, P2 extrêmes stables.

L'élément 66 mobile comporte un premier dipôle magnétique, dit dipôle 68 magnétique mobile, et l'élément 64 fixe comporte au moins un deuxième dipôle magnétique, dit dipôle 70 magnétique fixe, le dipôle 70 magnétique fixe exerçant une force Fm magnétique à distance sur le dipôle 68 magnétique mobile pour forcer l'élément 66 mobile vers l'une ou l'autre des positions P1, P2 extrêmes stables quelle que soit sa position entre ses deux positions P1, P2 extrêmes stables.

Chaque unité 18 de moulage comporte deux supports 22, 24 de moule qui sont montés mobiles sur le carrousel 12. Les supports 22, 24 de moule sont ici plus particulièrement montés sur la potence 20 associée. Les unités 18 de moulage étant toutes identiques.

L'invention sera décrite pour une station de soufflage, l'invention étant applicable à toutes les unités de moulage.

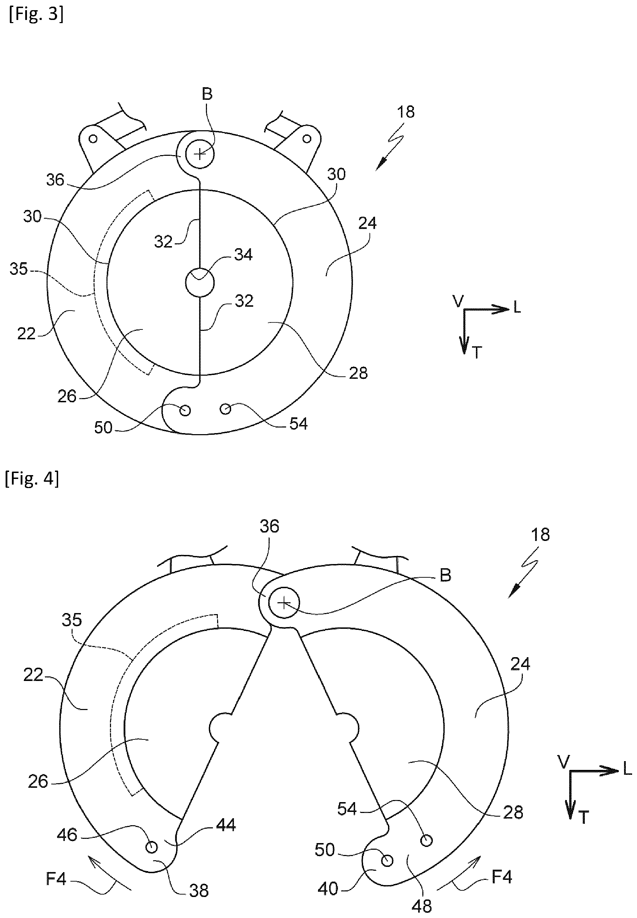

Chaque support 22, 24 de moule est destiné à recevoir une partie 26, 28 d'un moule, comme illustré aux figures 3 et 4. Un moule présente en effet au moins deux parties 26, 28 hémicylindriques présentant chacune une face 30 externe verticale cylindrique, destinée à être tournée vers le support 22, 24 de moule associé, et une face 32 interne verticale plane qui comporte une demi-empreinte du récipient à former. Lorsque les deux parties 26, 28 de moule sont jointes par leurs faces 32 internes, elles délimitent ainsi une cavité formant l'empreinte du récipient à former. Cette cavité débouche verticalement vers le haut par un passage 34 pour un col du récipient ou de la préforme.

Les supports 22, 24 de moule sont montés mobiles sur le carrousel 12 entre une position ouverte dans laquelle les deux parties 26, 28 de moule sont écartées l'une de l'autre, comme représenté à la figure 4, et une position fermée dans laquelle les deux parties 26, 28 de moule sont jointes par leur face 32 interne, comme illustré à la figure 3.

Pour garantir que les faces 32 internes des deux parties 26, 28 de moule soient jointes correctement lors de l'opération de moulage, il est connu d'interposer une chambre 35 de compensation entre la face 30 externe d'au moins une partie 26 de moule et son support 22 de moule. Ladite partie 26 de moule est montée coulissante avec un faible débattement entre une position rétractée vers le support 22 de moule et une position étendue en direction de l'autre partie 28 de moule. Lors d'une opération de soufflage, cette chambre 35 de compensation est alimentée avec un fluide sous pression comprimé pour pousser la partie 26 de moule vers sa position étendue.

Les supports 22, 24 de moule sont ici montés pivotants l'un par rapport à l'autre autour d'une charnière 36 d'axe "B" vertical. Chaque support 22, 24 de moule comporte ainsi un bord 38, 40 vertical libre opposé à la charnière 36. Les deux bords 38, 40 libres sont écartés en position ouverte des supports 22, 24 de moule, comme représenté à la figure 4, et jointifs en position fermée des supports 22, 24 de moule, comme représenté à la figure 3.

La charnière 36 est agencé du côté de l'axe "A" de rotation du carrousel 12, tandis que les bords 38, 40 libres sont agencés transversalement vers l'extérieur du carrousel 12.

Les supports 22, 24 de moule sont automatiquement commandés, par exemple par came, entre leur position fermée et une position extrême d'ouverture par des moyens mécaniques de commande. Ces moyens de commande sont bien connus et ne font pas l'objet de la présente invention. Ils ne seront donc pas décrits plus en détails par la suite.

Pour garantir que les supports 22, 24 de moule garderont leur position fermée durant l'opération de soufflage, ils sont équipés d'un dispositif 42 de verrouillage des supports 22, 24 de moule en position fermée.

Le dispositif 42 de verrouillage des supports 22, 24 de moule en position fermée comporte au moins un organe 52 de verrouillage qui est monté mobile sur un premier support de moule, ici le support 24 de moule droit représenté à droite aux figures 3 à 6. L'organe 52 de verrouillage est monté mobile entre :
- une position verrouillée dans laquelle il coopère avec au moins une face 45 de blocage du deuxième support de moule, ici le support 22 de moule gauche représenté à gauche aux figures 3 à 6, pour empêcher l'ouverture des supports 22, 24 de moule lorsqu'ils sont en position fermée ;
- et une position déverrouillée dans laquelle l'organe 52 de verrouillage est escamoté par rapport à la face 45 de blocage pour autoriser l'ouverture des supports 22, 24 de moule.

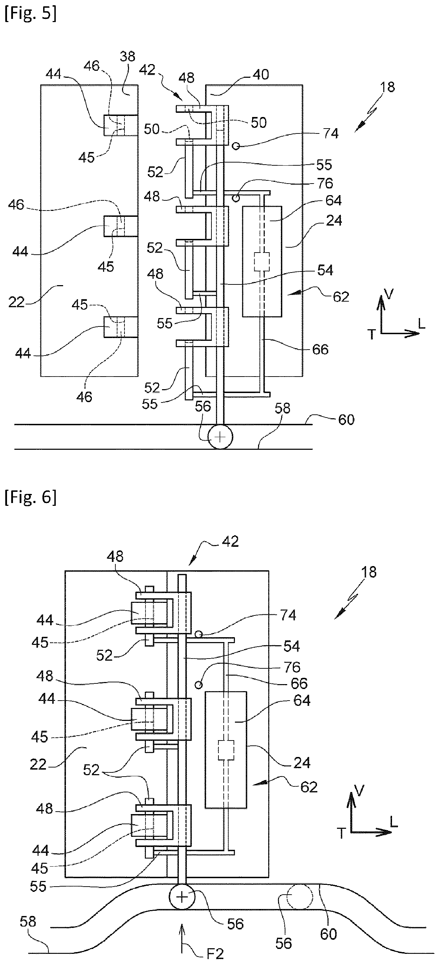

Sur les figures 5 et 6, l'organe 52 de verrouillage est monté coulissant par rapport au support 24 de moule droit qui le porte.

Le dispositif 42 de verrouillage comporte ici des oreilles 44 agencées en saillie vers l'extérieur sur le bord libre l'un des supports de moule, ici le bord 38 libre du support 22 de moule gauche. Les oreilles 44 s'étendent dans un plan horizontal et elles sont agencées verticalement l'une au-dessus de l'autre le long du bord 38 libre. Elles sont chacune traversées verticalement d'une gâche 46 dont la face interne forme la face 45 de blocage du support 22 de moule gauche. Les gâches 46 sont ici coaxiales verticalement. Les oreilles 44 sont ici au nombre de trois.

Le support 24 de moule droit est muni d'étriers 48 en forme de "U". Chaque étrier 48 comporte deux ailes s'étendant parallèlement dans un plan horizontal. Les ailes de l'étrier sont traversées verticalement d'orifices 50 de guidage. Les orifices 50 de guidage sont coaxiaux verticalement. Les étriers 48 sont agencés verticalement l'un au-dessus de l'autre le long du bord 40 libre du support 24 de moule droit. Le support 24 de moule droit comporte autant d'étriers 48 que le support 22 de moule gauche comporte d'oreilles 44.

Lorsque les supports 22, 24 de moule occupent leur position fermée, comme illustré à la figure 6, chaque oreille 44 est reçue entre les deux ailes d'un étrier 48 correspondant. Chaque gâche 46 est en coïncidence avec les orifices 50 de guidage de l'étrier 48. Le dispositif 42 de verrouillage comporte en outre des organes 52 de verrouillage formés par des doigts d'axe verticaux qui sont portés par le support 24 de moule droit. Les organes 52 de verrouillage sont guidés en coulissement vertical dans les orifices 50 de guidage des étriers 48. Le support 24 de moule droit comporte autant d'organes 52 de verrouillage que d'étriers 48.

Chaque organe 52 de verrouillage est monté coulissant verticalement sur le support 24 de moule droit entre une position extrême inférieure déverrouillée dans laquelle une extrémité supérieure libre de l'organe 52 de verrouillage est agencé sensiblement au niveau de l'aile inférieure de l'étrier 48 associé, comme représentée à la figure 5, et une position extrême supérieure verrouillée dans laquelle l'organe 52 de verrouillage est passé en travers des orifices 50 de guidage de l'aile inférieure et de l'aile supérieure de l'étrier 48 associé, comme représenté à la figure 6.

Comme représenté à la figure 6, lorsque les supports 22, 24 de moule occupent leur position fermée, chaque organe 52 de verrouillage traverse ainsi la gâche 46 de l'oreille 44 logée dans l'étrier 48 associé. Chaque organe 52 de verrouillage coopère ainsi avec la face 45 interne de la gâche 46 pour empêcher l'ouverture des supports 22, 24 de moule.

Dans la suite de la description, on considère que les supports 22, 24 de moule sont en position fermée uniquement lorsque les orifices 50 de guidage sont suffisamment en coïncidence avec les gâches 46 pour permettre le coulissement des organes 52 de verrouillage vers leur position verrouillé en passant à travers les gâches 46 associées, comme illustré aux figures 3 et 6. Dans toute autre position que la position fermée ainsi définie, les supports 22, 24 de moule sont considérés comme étant en position ouverte.

Le dispositif 42 de verrouillage est apte à être commandé automatiquement, par exemple par came, entre son état déverrouillé et son état verrouillé. A cet effet, tous les organes 52 de verrouillage sont fixés à une tringle 54 verticale commune de commande qui est montée coulissante verticalement sur le support 24 de moule droit. La tringle 54 est ici décalée longitudinalement par rapport aux organes 52 de verrouillage. Les organes 52 de verrouillage sont fixés à la tringle 54 par l'intermédiaire de tiges 55 horizontales de fixation.

La tringle 54 est guidée en coulissement dans des bases de chaque étrier 48. Tous les organes 52 de verrouillage coulissent ainsi de concert avec la tringle 54. Le coulissement de des organes 52 de verrouillage est commandé par un suiveur de came, ici un galet 56 agencé à une extrémité inférieure de la tringle 54, qui roule sur un chemin 58 de came de verrouillage tourné vers le haut qui est fixe par rapport à la base 14 du carrousel 12. Ainsi, lorsque le galet 56 arrive sur un tronçon montant du chemin 58 de came de verrouillage, la tringle 54 coulisse vers le haut, comme indiqué par la flèche "F2" de la figure 6, pour commander les organes 52 de verrouillage dans leur position verrouillée.

Les organes 52 de verrouillage sont commandés, par exemple par une deuxième came de déverrouillage, vers leur position déverrouillée. Ainsi, le galet 56 est susceptible de commander les organes 52 de verrouillage à nouveau vers leur position déverrouillée par coopération avec un tronçon descendant d'un chemin 60 de came de déverrouillage orienté vers le bas, comme indiqué en traits interrompus à la figure 6.

Dans une variante non représentée, les organes de verrouillage peuvent être commandés entre leur état verrouillé et leur état déverrouillé par tout autre moyen connu, par exemple par un moteur électrique.

Pour éviter que les organes 52 de verrouillage n'occupent une position intermédiaire entre leur position verrouillée et déverrouillée, l'unité 18 de moulage est équipée d'un dispositif 62 bistable qui comporte :
- un premier élément 64 fixe par rapport au support 24 de moule droit, qui porte les organes 52 de verrouillage ; et
- un deuxième élément 66 mobile qui est monté mobile le long d'un trajet déterminé sur le support 24 de moule droit et qui est lié en déplacement avec les organes 52 de verrouillage.

L'élément 66 mobile comporte au moins un premier dipôle magnétique, dit dipôle 68 magnétique mobile, et l'élément 64 fixe comporte au moins un deuxième dipôle magnétique, dit dipôle 70 magnétique fixe.

Le dipôle 68 magnétique mobile et le dipôle 70 magnétique fixe interagissent ensemble pour forcer l'élément 66 mobile vers deux positions extrêmes stables "P1" et "P2" qui sont situées aux deux extrémités de son trajet, de part et d'autre d'une position "P0" intermédiaire d'équilibre instable. L'élément 66 mobile permet ainsi de forcer le dispositif 42 de verrouillage vers sa position verrouillée correspondant à la première position "P1" extrême stable de l'élément 66 mobile, ou vers sa position déverrouillée correspondant à la deuxième position "P2" extrême stable de l'élément 66 mobile.

A cet effet, au moins l'un des dipôles 68, 70 magnétiques exerce une force "Fm" magnétique à distance sur l'autre dipôle 70, 68 magnétique pour forcer l'élément 66 mobile vers l'une ou l'autre de ses deux positions "P1", "P2" extrêmes stables quelle que soit sa position le long de son trajet.

Plus particulièrement, lorsque l'élément 66 mobile est situé entre sa position "P0" intermédiaire d'équilibre instable et sa première position "P1" extrême stable, il est forcé vers ladite première position "P1" extrême stable, tandis que lorsque l'élément 66 mobile est situé entre sa position "P0" intermédiaire d'équilibre instable et sa deuxième position "P2" extrême stable, il est forcé vers ladite deuxième position "P2" extrême stable. Lorsque l'élément 66 mobile occupe sa position "P0" intermédiaire d'équilibre instable, il est immédiatement forcé vers l'une ou l'autre de ses positions extrêmes stables "P1" ou "P2" de manière aléatoire.

Chacun des deux dipôles 68, 70 magnétiques émet un champ magnétique. Plus particulièrement, chaque dipôle 68, 70 magnétique émet constamment un champ magnétique au moins pendant que l'unité 18 de moulage est en cours de production de récipients. Chaque dipôle 68, 70 magnétique est ici formé par un aimant permanent ou un empilement d'aimants permanents. Il est en effet connu que plusieurs aimants permanents empilés et joints les uns aux autres par attraction magnétique agissent ensemble comme un unique dipôle magnétique.

Chaque aimant permanent est réalisé en un matériau compatible avec les températures d'utilisation des unités 18 de moulage qui peuvent s'élever jusqu'à environ 100°C. Chaque aimant permanent est par exemple réalisé à base de néodyme (Nd), il s'agit par exemple d'aimant réalisé en un alliage de néodyme, de fer et de bore (NdFeB). En variante, chaque aimant permanent est par exemple réalisé à base de samarium (Sm), il s'agit par exemple d'aimant réalisé en un alliage de samarium et de cobalt (SmCo).

En variante non représentée de l'invention, au moins l'un des dipôles magnétiques est formé par un électroaimant. En ce cas, l'électroaimant est alimenté de manière à produire un champ magnétique stationnaire en permanence quelle que soit la position de l'élément 66 mobile lorsque l'unité 18 de moulage fonctionne pour produire des récipients.

Dans les modes de réalisation de l'invention représentés aux figures, chaque dipôle 70 magnétique fixe agit ici par répulsion magnétique sur chaque dipôle 68 magnétique mobile en exerçant sur lui une force "Fm" de répulsion pour pousser l'élément 66 mobile vers l'une ou l'autre de ses deux positions extrêmes stables "P1" ou "P2".

La force de répulsion exercée par l'ensemble des dipôles 70 magnétiques fixes sur l'ensemble des dipôles 68 magnétiques mobiles est suffisante pour maintenir l'organe 52 de verrouillage dans sa position verrouillée ou déverrouillée correspondant à l'une ou l'autre des positions extrêmes stables "P1" ou "P2" de l'élément 66 mobile, notamment lorsque le galet 56 de commande n'est pas en contact avec l'une ou l'autre des chemins 58 ou 60 de came de verrouillage ou de déverrouillage.

Pour éviter d'interférer avec le champ magnétique émis par les dipôles 68, 70 magnétiques, les composants de l'élément 66 mobile et de l'élément 64 fixe sont réalisés en matériaux amagnétiques, c'est-à-dire présentant une susceptibilité magnétique négligeable, tels que l'aluminium, le cuivre ou le plastique.

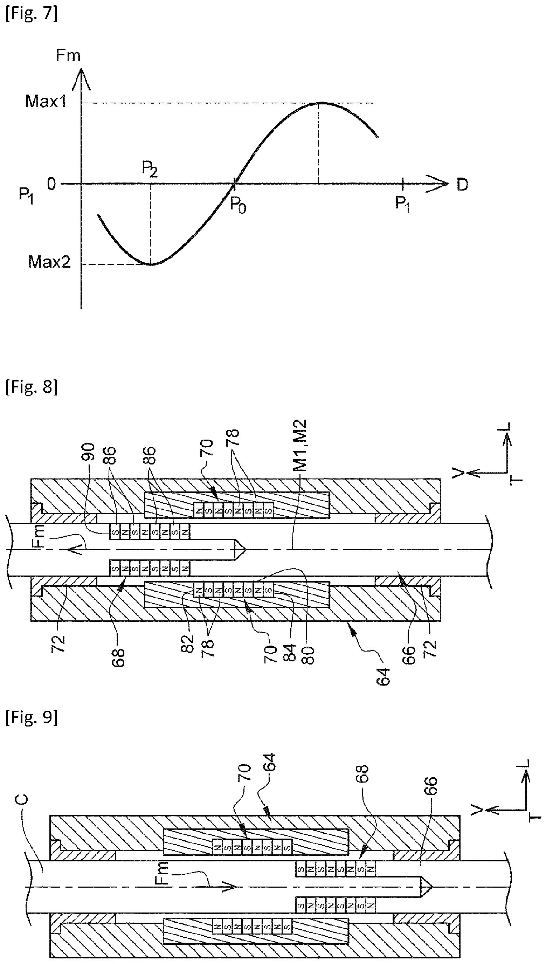

Comme cela est représenté à la figure 7, la force "Fm" de répulsion varie en fonction de la position de l'élément 66 mobile entre ses deux positions extrêmes stables "P1" et "P2". La force "Fm" est ici représentée par sa valeur algébrique, elle est positive lorsqu'elle pousse l'élément 66 mobile vers sa première position "P1" extrême stable et elle est négative lorsqu'elle pousse l'élément 66 mobile vers sa deuxième position "P2" extrême stable. Lorsque l'élément 66 mobile occupe sa position "P0" d'équilibre instable, la force "Fm" de répulsion est nulle.

Les dipôles 68, 70 magnétiques sont agencés de manière que la variation de la force "Fm" de répulsion en fonction de la position de l'élément 66 mobile présente une pente qui relie deux extrema "Max1" et "Max2" de signes opposés. Les dipôles 68, 70 magnétiques sont ici conçus et agencés pour que la valeur absolue de la force "Fm" exercée sur l'ensemble des dipôles 68 magnétique mobile soit comprise entre 30 N et 100 N, par exemple environ égale à 60 N, dans chacune de ses deux positions extrêmes stables "P1" et "P2".

Dans l'exemple représenté à la figure 7, les dipôles 68, 70 magnétiques sont conçus et agencés pour que la valeur absolue de la force "Fm" exercée sur l'ensemble des dipôles 68 magnétique mobile soit égale à son extremum local "Max1", respectivement "Max2", dans sa première position extrême stable "P1", respectivement dans sa deuxième position extrême stable "P2".

Dans le premier mode de réalisation représenté aux figures 5, 6 et 8 à 11, l'élément 66 mobile est monté coulissant verticalement par rapport à l'élément 64 fixe. L'élément 66 mobile est plus particulièrement solidaire en déplacement avec les organes 52 de verrouillage. L'élément 66 mobile est ici formé d'une tige d'axe "C" vertical qui est fixée à la tringle 54, par exemple par l'intermédiaire de tiges 55 transversales. L'élément 64 fixe comporte des paliers 72 de guidage en coulissement de l'élément 66 mobile.

Comme cela est représenté aux figures 5 et 6, les déplacements des organes 52 de verrouillage sont limités dans leur position verrouillée par une première butée 74 mécanique et dans leur position déverrouillée, par une deuxième butée 76 mécanique. De manière non limitative, les butées 74, 76 mécaniques sont formées par des pions fixés sur le support 24 de moule droit. L'élément 66 mobile étant solidaire en déplacement des organes 52 de verrouillage, ses déplacements sont aussi limités dans sa première position "P1" extrême stable supérieure, correspondant à la position verrouillée, par la première butée 74 mécanique, comme illustré à la figure 8, et dans sa deuxième position "P2" extrême stable inférieure, correspondant à la position déverrouillée, par la deuxième butée 76 mécanique, comme illustré à la figure 9.

L'élément 64 fixe comporte ici un unique dipôle 70 magnétique. Le dipôle 70 magnétique fixe représenté aux figures 8 à 11 présente un axe polaire "M1" orienté parallèlement à la trajectoire de l'élément 66 mobile. L'axe polaire "M1" est ainsi orienté verticalement. Le dipôle 70 magnétique fixe est plus particulièrement formé d'au moins un aimant 78 annulaire aimanté axialement. L'axe polaire "M1" de l'aimant 78 annulaire coïncide ainsi avec son axe principal.

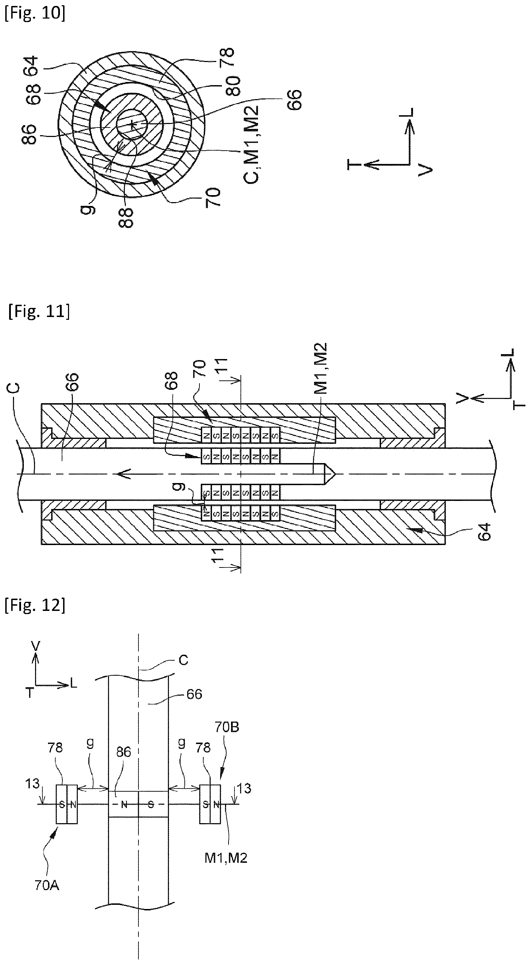

Chaque aimant 78 annulaire présente ainsi en coupe transversale un orifice 80 central de profil circulaire au milieu duquel passe l'axe "M1" polaire, comme représenté à la figure 10. Une face 82 annulaire supérieure de chaque aimant 78 annulaire forme un premier pôle d'une première polarité, par exemple un pôle nord "N" comme cela est représenté aux figures 8 à 11, tandis que la face 84 annulaire inférieure de chaque aimant 78 annulaire forme un deuxième pôle de polarité opposée, par exemple un pôle sud "S". Dans les exemples représentés, le dipôle 70 magnétique fixe est plus particulièrement formé par un empilement de plusieurs aimants 78 annulaires, ici quatre aimants 78 annulaires identiques. Le dipôle 70 magnétique fixe est plus particulièrement agencé de manière à ce que son axe "M1" polaire soit coaxial avec l'axe "C" de l'élément 66 mobile.

L'élément 66 mobile comporte ici un unique dipôle 68 magnétique. Le dipôle 68 magnétique mobile présente un axe "M2" polaire orienté parallèlement à sa trajectoire, ici vertical. Le dipôle 68 magnétique mobile est plus particulièrement formé d'au moins un aimant 86 annulaire aimanté axialement. Son axe polaire "M2" coïncide avec son axe principal, comme représenté à la figure 10. Chaque aimant 86 annulaire présente ainsi en coupe transversale un orifice 88 central de profil circulaire au milieu duquel passe l'axe "M2" polaire. Une face 90 annulaire supérieure de chaque aimant 86 annulaire forme un premier pôle d'une première polarité, par exemple un pôle sud "S" comme cela est représenté aux figures 7 à 10, tandis que la face 92 annulaire inférieure de chaque aimant 86 annulaire forme un deuxième pôle de polarité opposée, par exemple un pôle nord "N". Dans les exemples représentés, le dipôle 68 magnétique mobile est plus particulièrement formé par un empilement de plusieurs aimants 86 annulaires, ici quatre aimants 86 annulaires identiques.

L'axe "M2" polaire du dipôle 68 magnétique mobile est agencé coaxialement à l'axe "M1" polaire du dipôle 70 magnétique fixe afin que les forces radiales, par rapport à l'axe "C" de l'élément 66 mobile, susceptibles d'être appliquées par le dipôle 70 magnétique fixe sur le dipôle 68 magnétique mobile s'annulent sensiblement.

L'élément 66 mobile est ici formé d'une tige réalisée en deux tronçons, les aimants 86 annulaires du dipôle 68 magnétique mobile étant ici enfilés autour d'une extrémité terminale du premier tronçon qui est ensuite fixé, par exemple par vissage au deuxième tronçon pour fixer verticalement les aimants 86 annulaires sur l'élément 66 mobile par serrage vertical entre les deux tronçons.

Les aimants 86 annulaires formant le dipôle 68 magnétique mobile sont reçus coulissants dans l'orifice 80 central de aimants 78 annulaires du dipôle 70 magnétique fixe, comme cela est visible aux figures 8 à 11. Dans la position "P0" d'équilibre instable de l'élément 66 mobile, représentée à la figure 11, le dipôle 68 magnétique mobile est reçu concentriquement dans l'orifice 80 central du dipôle 70 magnétique fixe, un entrefer "g" annulaire étant réservé radialement entre la face cylindrique externe du dipôle 68 magnétique mobile et la face cylindrique interne du dipôle 70 magnétique fixe.

La polarité du dipôle 68 magnétique mobile, formé par les aimants 86 annulaires, est inversée par rapport à la polarité du dipôle 70 magnétique fixe, formé par les aimants 78 annulaires.

Lors du fonctionnement de l'unité 18 de moulage, en partant de la position verrouillée représentée à la figure 6, l'élément 66 mobile occupe sa première position "P1" extrême stable représentée à la figure 8, dans laquelle le dipôle 70 magnétique fixe exerce une force "Fm" magnétique dirigée vers le haut qui est ici égale à son extremum local "Max1". Plus précisément, le pôle inférieur, ici le pôle nord "N", du dipôle 68 magnétique mobile est repoussé vers le haut par le pôle supérieur de même polarité du dipôle 70 magnétique fixe. L'élément 66 mobile est ainsi poussé contre la première butée 74 mécanique avec une force suffisante pour maintenir l'organe 52 de verrouillage dans sa position verrouillée.

Lorsque le galet 56 roule sur la pente descendante du chemin 60 de came de déverrouillage, il exerce sur l'élément 66 mobile une force de commande dirigée verticalement vers le bas qui surpasse la force "Fm" magnétique du dispositif 62 bistable. L'élément 66 mobile coulisse ainsi verticalement vers le bas à l'encontre de la force "Fm" magnétique jusqu'à atteindre sa position "P0" d'équilibre instable représentée à la figure 11. Ce faisant, l'intensité de la force "Fm" magnétique diminue régulièrement comme cela est représenté à la figure 7.

Lorsque l'élément 66 mobile dépasse sa position "P0" d'équilibre instable et se rapproche de sa deuxième position "P2" d'équilibre, la force "Fm" augmente et elle est dirigée vers le bas de manière à pousser l'élément 66 mobile vers sa deuxième position "P2" extrême stable dans laquelle il est arrêté par la deuxième butée 76 mécanique, comme représenté aux figures 5 et 9.

Lorsque l'élément 66 mobile atteint sa deuxième position "P2" extrême stable, il est poussé contre la deuxième butée 76 mécanique par la force "Fm" magnétique avec une intensité suffisante pour maintenir l'organe 52 de verrouillage dans sa position déverrouillée.

Pour commander à nouveau l'organe 52 de verrouillage vers sa position verrouillée, le galet 56 roule sur la pente montante du chemin 58 de came de verrouillage, exerçant sur l'élément 66 mobile une force de commande dirigée verticalement vers le haut qui surpasse la force "Fm" magnétique du dispositif 62 bistable. L'élément 66 mobile coulisse ainsi verticalement vers le haut à l'encontre de la force "Fm" magnétique jusqu'à atteindre sa position "P0" d'équilibre instable représentée à la figure 11. Ce faisant, l'intensité de la force "Fm" magnétique diminue régulièrement comme cela est représenté à la figure 7.

Lorsque l'élément 66 mobile dépasse sa position "P0" d'équilibre instable et se rapproche de sa première position "P1" d'équilibre, la force "Fm" augmente et elle est dirigée vers le haut de manière à pousser l'élément 66 mobile vers sa première position "P1" extrême stable, correspondant à la position verrouillée de l'organe 52 de verrouillage, dans laquelle il est arrêté par la première butée 74 mécanique, comme représenté aux figures 6 et 8.

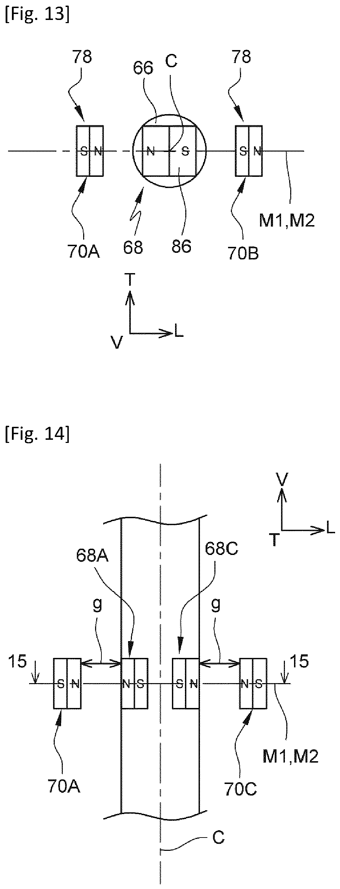

On a représenté aux figures 12 et 13 un dispositif 62 bistable.

L'élément 64 fixe comporte ici au moins un dipôle 70 magnétique dont l'axe "M1" polaire est orienté orthogonalement à la trajectoire de l'élément 66 mobile. Les dipôles 70 magnétiques fixes sont ici formés par des aimants 78 permanents.

Dans l'exemple représenté aux figures 12 et 13, l'élément 64 fixe comporte deux dipôles 70A, 70B magnétiques fixes qui sont répartis symétriquement par rapport à l'axe "C" de coulissement de l'élément 66 mobile. Ainsi, les axes "M1" polaires de chacun des dipôles 70A, 70B magnétiques fixes sont agencés coaxialement entre eux, et radialement par rapport à l'axe "C" de coulissement. Le ou les dipôles 68 magnétiques mobiles sont destinés à passer entre les dipôles 70 magnétiques fixes.

Chaque dipôle 70A, 70B magnétique fixe présente ainsi un pôle, dit pôle actif, qui est agencé en vis-à-vis de la trajectoire du ou des dipôles 68 magnétiques mobiles.

Dans l'exemple représenté, chaque dipôle 70A, 70B magnétique fixe est formé par un aimant 78 permanent. Le pôle actif de l'un des dipôles 70A magnétiques fixes est formé par un pôle nord "N", comme représenté à gauche des figures, tandis que le pôle actif de l'autre des dipôles 70B magnétiques fixes est formé par un pôle sud "S".

L'élément 66 mobile comporte ici un unique dipôle 68 magnétique mobile. Le dipôle 68 magnétique mobile est formé d'un aimant 86 permanent. Le dipôle 68 magnétique mobile présente un axe "M2" polaire qui est orienté orthogonalement à sa trajectoire, ici radialement par rapport à l'axe "C" de coulissement. Dans l'exemple représenté aux figures 12 et 13, l'axe "M2" polaire est ainsi orienté parallèlement à l'axe "M1" polaire des dipôles 70 magnétiques fixes.

Le dipôle 68 magnétique mobile présente ainsi deux pôles, dits pôles de répulsion, dont chacun est agencé en vis-à-vis d'un pôle actif de même polarité de chaque dipôle 70A, 70B magnétique fixe lorsque l'élément 66 mobile occupe sa position "P0" d'équilibre instable. Les pôles de répulsion sont agencés symétriquement par rapport à l'axe "C" de coulissement. Dans la position "P0" d'équilibre instable, les axes polaires "M1, M2" des dipôles 70A, 70B magnétiques fixes et du dipôle 68 magnétique mobile sont ici alignés.

Un entrefer "g" est réservé radialement entre chaque pôle de répulsion du dipôle 68 magnétique mobile et le pôle actif du dipôle 70A, 70B magnétique fixe associé de manière à permettre le passage sans contact du dipôle 68 magnétique mobile entre les dipôles 70A, 70B magnétiques fixes. L'intensité de la force magnétique "Fm" peut être ajustée en agissant sur l'entrefer "g".

Pour permettre un bon fonctionnement du dispositif 62 bistable, le dipôle 68 magnétique mobile doit conserver une position angulaire fixe par rapport aux dipôles 70A, 70B magnétiques fixes pour que les axes polaires "M1" et "M2" demeurent parallèles entre eux.

Le fonctionnement du dispositif 62 bistable réalisé selon ce deuxième mode de réalisation est identique à celui du premier mode de réalisation. Il ne sera donc pas décrit plus en détails par la suite.

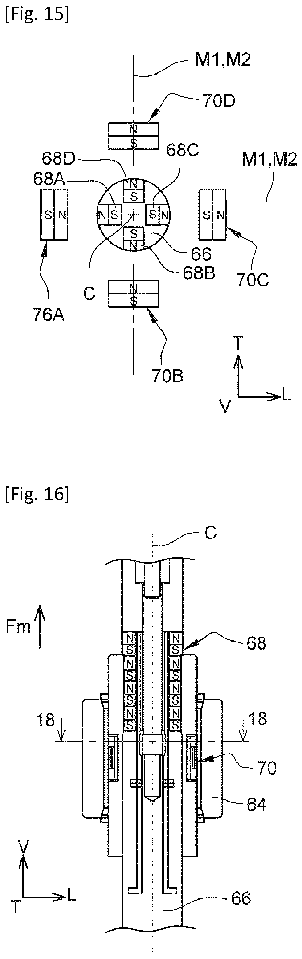

En variante de ce deuxième mode de réalisation représentée aux figures 14 et 15, l'élément 64 fixe comporte plus de deux dipôles 70A, 70B, 70C, 70D magnétiques, ici quatre, qui sont répartis régulièrement autour de l'axe "C" de coulissement de l'élément 66 mobile, pour former une couronne. Ainsi, les axes "M1" polaires de chacun des dipôles 70A, 70B, 70C, 70D magnétiques fixes sont agencés radialement par rapport à l'axe "C" de coulissement de l'élément 66 mobile.

Chaque dipôle 70A, 70B, 70C, 70D magnétique fixe présente ainsi un pôle, dit pôle actif, qui est agencé en vis-à-vis de la trajectoire d'un dipôle 68A, 68B, 68C, 68D magnétique mobile associé.

De même, l'élément 66 mobile comporte ici plusieurs dipôles 68A, 68B, 68C, 68D magnétiques mobiles qui sont agencés régulièrement autour de l'axe "C" de coulissement. Les dipôles 68A, 68B, 68C, 68D magnétiques mobiles sont destinés à passer entre les dipôles 70A, 70B, 70C, 70D magnétiques fixes. Les dipôles 68A, 68B, 68C, 68D magnétiques mobiles sont ici chacun formés d'un aimant 86 permanent. Chaque dipôle 68A, 68B, 68C, 68D magnétique mobile présente un axe "M2" polaire qui est orienté orthogonalement à sa trajectoire, ici radialement par rapport à l'axe "C" de coulissement. Dans l'exemple représenté aux figures 14 et 15, l'axe "M2" polaire est ainsi orienté parallèlement à l'axe "M1" polaire d'un dipôle 70A, 70B, 70C, 70D magnétique fixe.

Avantageusement, tous les pôles actifs des dipôles 70A, 70B, 70C, 70D magnétiques fixes présentent ici une même polarité. Il s'agit par exemple de pôles nord "N". Dans ce cas, l'élément 66 mobile comporte autant de dipôles 68A, 68B, 68C, 68D magnétiques mobiles que l'élément 64 fixe ne comporte de dipôles 70A, 70B, 70C, 70D magnétiques fixes. Chaque dipôle 68A, 68B, 68C, 68D magnétique mobile présente ainsi un pôle dit "pôle de répulsion" qui est agencé en vis-à-vis d'un pôle actif de même polarité d'un dipôle 70A, 70B, 70C, 70D magnétique fixe associé lorsque l'élément 66 mobile occupe sa position "P0" d'équilibre instable.

Dans cette position "P0" d'équilibre instable, les axes polaires "M1", M2" de deux dipôles 68, 70 magnétiques fixe et mobile associés sont alignés. Un entrefer "g" est réservé entre le pôle actif et le pôle de répulsion associé.

Dans la première position "P1" extrême d'équilibre stable, le dipôle 68 magnétique mobile est agencé au-dessus de sa position "P0" d'équilibre instable, tandis que dans la deuxième position "P2" extrême d'équilibre stable, le dipôle 68 magnétique mobile est agencé au-dessous de sa position "P0" d'équilibre instable.

Avec une telle configuration, il est plus facile d'orienter correctement l'élément 66 mobile autour de l'axe "C" de coulissement pour que chaque pôle de répulsion des dipôles 68A, 68B, 68C, 68D magnétiques mobiles soit en regard d'un pôle actif associé des dipôles 70A, 70B, 70C, 70D magnétiques fixes.

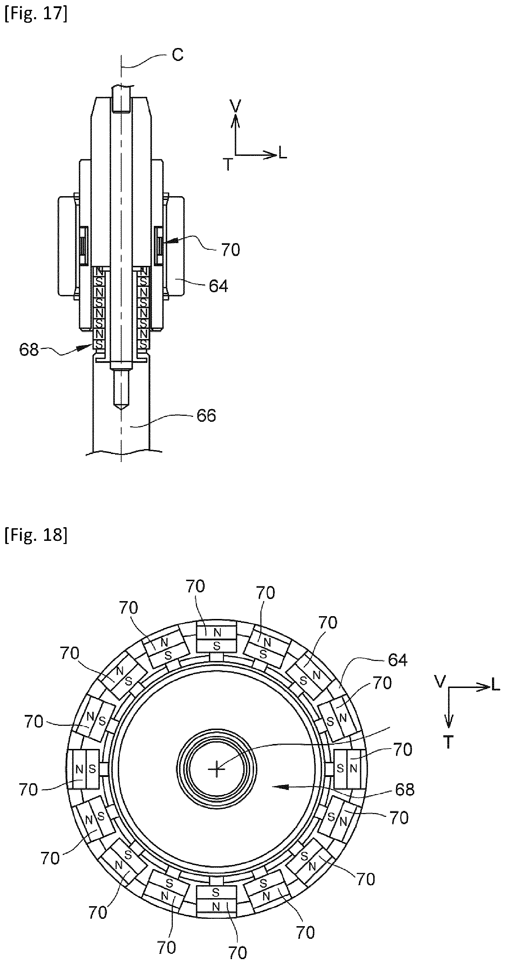

On a représenté aux figures 16 à 18 un élément fixe comporte plusieurs dipôles magnétiques, ici seize dipôles 70 magnétiques, qui sont répartis régulièrement en couronne autour de l'axe "C" de coulissement de l'élément 66 mobile. Les axes "M1" polaires de chacun des dipôles 70 magnétiques fixes sont agencés radialement par rapport à l'axe "C" de coulissement de l'élément 66 mobile. De cette manière, chaque dipôle 70 magnétique fixe présente un pôle actif tourné vers l'axe "C" de coulissement. Les pôles actifs présentent tous la même polarité.

L'élément 66 mobile comporte ici un unique dipôle 68 magnétique. Le dipôle 68 magnétique mobile présente un axe "M2" polaire orienté parallèlement à sa trajectoire, ici vertical. Le dipôle 68 magnétique mobile est ici réalisé de manière identique à celui déjà décrit dans le premier mode de réalisation.

Le dipôle 68 magnétique mobile est destiné à passer entre les pôles actifs des dipôles 70 magnétiques fixes. L'un des pôles du dipôle 68 magnétique mobile, appelé par la suite "pôle de répulsion", présente la même polarité que les pôles actifs des dipôles 70 magnétiques fixes. Les pôles actifs et le pôle de répulsion sont ici des pôles sud "S". Le pôle de répulsion du dipôle 68 magnétique mobile passe en vis-à-vis des pôles actifs des dipôles 70 magnétiques fixes lorsque l'élément 66 mobile occupe une position intermédiaire entre ses deux positions extrêmes stables "P1" et P2". De manière non limitative, le pôle de répulsion est ici agencé en bas du dipôle 68 magnétique mobile.

Comme dans les autres modes de réalisation, un entrefer "g" est réservé radialement entre le dipôle 68 magnétique mobile et chacun des pôles actifs des dipôles 70 magnétiques fixes.

Lors du fonctionnement de l'unité 18 de moulage, en partant de la position verrouillée représentée à la figure 6, l'élément 66 mobile occupe sa première position "P1" extrême stable représentée à la figure 16, dans laquelle le dipôle 70 magnétique fixe exerce une force "Fm" magnétique dirigée vers le haut qui est ici égale à son extremum local "Max1". Plus précisément, le pôle inférieur de répulsion, ici le pôle nord "S", du dipôle 68 magnétique mobile est repoussé vers le haut par les pôles actifs de même polarité des dipôles 70 magnétiques fixes. L'élément 66 mobile est ainsi poussé contre la première butée 74 mécanique avec une force suffisante pour maintenir l'organe 52 de verrouillage dans sa position verrouillée. Dans cette première position "P1" extrême stable, le dipôle 68 magnétique mobile est sensiblement agencé au-dessus des dipôles 70 magnétiques fixes.

Lorsque le galet 56 roule sur la pente descendante du chemin 60 de came de déverrouillage, il exerce sur l'élément 66 mobile une force de commande dirigée verticalement vers le bas qui surpasse la force "Fm" magnétique du dispositif 62 bistable. L'élément 66 mobile coulisse ainsi verticalement vers le bas à l'encontre de la force "Fm" magnétique jusqu'à atteindre sa position "P0" d'équilibre instable. Ce faisant, l'intensité de la force "Fm" magnétique diminue régulièrement.

Lorsque l'élément 66 mobile dépasse sa position "P0" d'équilibre instable et se rapproche de sa deuxième position "P2" d'équilibre, la force "Fm" augmente et elle est dirigée vers le bas de manière à pousser l'élément 66 mobile vers sa deuxième position "P2" extrême stable dans laquelle il est arrêté par la deuxième butée 76 mécanique.

Lorsque l'élément 66 mobile atteint sa deuxième position "P2" extrême stable, il est poussé contre la deuxième butée 76 mécanique par la force "Fm" magnétique avec une intensité suffisante pour maintenir l'organe 52 de verrouillage dans sa position déverrouillée. La force magnétique "Fm" est ici constituée par la force de répulsion exercée par les pôles actifs des dipôles 70 magnétiques fixes sur le pôle de répulsion du dipôle 68 magnétique mobile, à laquelle s'ajoute la force d'attraction qu'exercent les pôles actifs des dipôles 70 magnétiques fixes sur le pôle de polarité opposé, ici le pôle nord "N", du dipôle 68 magnétique mobile. Dans cette deuxième position "P2" extrême stable, le pôle du dipôle 68 magnétique mobile opposé au pôle de répulsion est sensiblement agencé au même niveau que les dipôles 70 magnétiques fixes.

Pour commander à nouveau l'organe 52 de verrouillage vers sa position verrouillée, le galet 56 roule sur la pente montante du chemin 58 de came de verrouillage, exerçant sur l'élément 66 mobile une force de commande dirigée verticalement vers le haut qui surpasse la force "Fm" magnétique du dispositif 62 bistable. L'élément 66 mobile coulisse ainsi verticalement vers le haut à l'encontre de la force "Fm" magnétique jusqu'à atteindre sa position "P0" d'équilibre instable représentée à la figure 9. Ce faisant, l'intensité de la force "Fm" magnétique diminue régulièrement.

Lorsque l'élément 66 mobile dépasse sa position "P0" d'équilibre instable et se rapproche de sa première position "P1" d'équilibre, la force "Fm" magnétique augmente et elle est dirigée vers le haut de manière à pousser l'élément 66 mobile vers sa première position "P1" extrême stable, correspondant à la position verrouillée de l'organe 52 de verrouillage, dans laquelle il est arrêté par la première butée 74 mécanique.

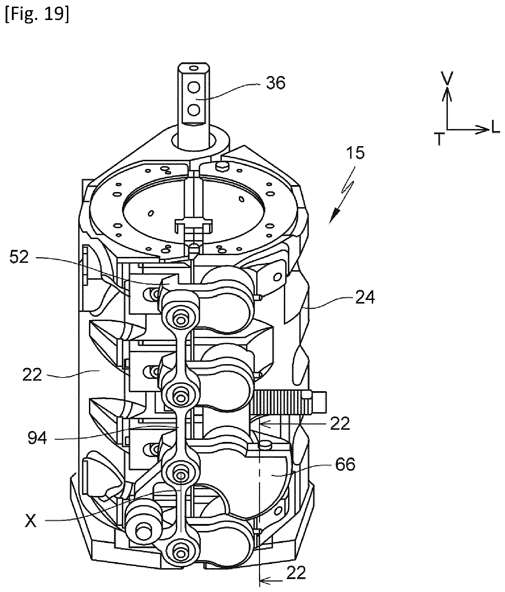

Selon les figures 19 à 22, l'élément 66 mobile est monté pivotant sur le support 24 de moule droit entre ses deux positions stables autour d'un axe "X" de pivotement.

Dans l'exemple représenté aux figures, les organes 52 de verrouillage sont aussi monté pivotants sur le support 24 de moule droit entre leur position verrouillée et leur position déverrouillée. Les organes 52 de verrouillage et l'élément 66 mobile sont liés en rotation par l'intermédiaire d'une bielle 94 qui joue le même rôle que la tringle 54 du premier mode de réalisation de l'invention.

Le dipôle 68 magnétique mobile est ici fixé sur l'élément 66 mobile de manière excentrée par rapport à l'axe "X" de pivotement, tandis que le dipôle 70 magnétique fixe est fixé sur le support 24 de moule droit.

Le dipôle 70 magnétique fixe présente un axe polaire "M1" qui est orienté parallèlement à l'axe "X" de pivotement de l'élément 66 mobile. Un pôle actif, ici de polarité nord "N", est tourné vers la trajectoire du dipôle 68 magnétique mobile.

Le dipôle 68 magnétique mobile présente un axe polaire "M2" qui est aussi orienté parallèlement à l'axe "X" de pivotement de l'élément 66 mobile. Un pôle de répulsion, de même polarité que le pôle actif du dipôle 70 magnétique fixe, est agencé en vis-à-vis du pôle actif lorsque l'élément 66 mobile occupe sa position "P0" d'équilibre instable.

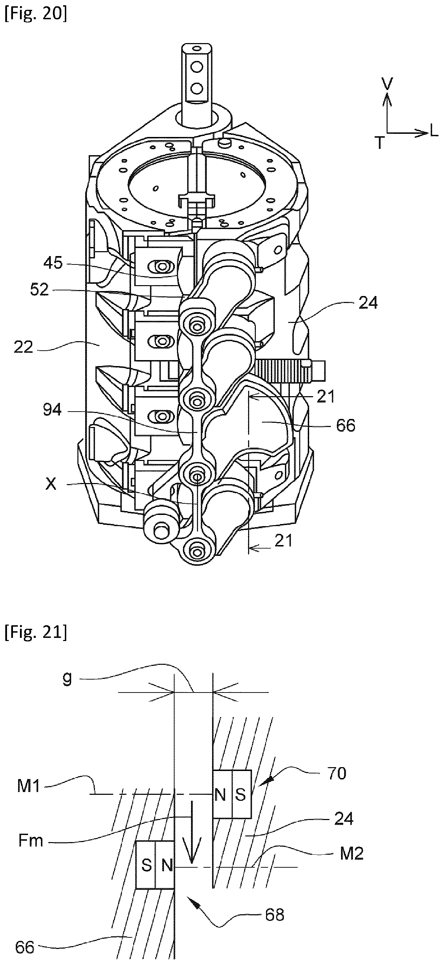

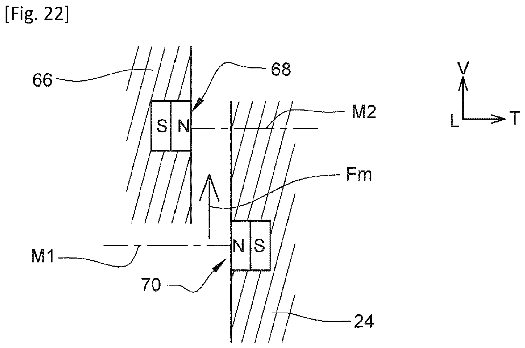

Comme représenté aux figures 21 et 22, le dipôle 70 magnétique fixe exerce ainsi une force magnétique "Fm" de répulsion sur le dipôle 68 magnétique mobile pour repousser l'élément 66 mobile vers chacune de ses positions extrêmes stables "P1" ou "P2" représentées respectivement aux figures 21 et 22.

Le fonctionnement du dispositif 62 bistable réalisé selon ce quatrième mode de réalisation est analogue au fonctionnement du dispositif 62 bistable réalisé selon le premier mode de réalisation de l'invention.

Le dispositif 62 bistable réalisé selon les enseignements de l'invention permet à l'élément 66 mobile d'interagir sans contact avec l'élément 64 fixe. Ceci permet d'éviter l'usure des pièces mobiles du dispositif et de diminuer les opérations de maintenance du dispositif 62 bistable.

Le dispositif 62 bistable ainsi conçu est en outre peu onéreux à concevoir, à fabriquer et à entretenir.

On comprendra que le dispositif 62 bistable réalisé selon l'un quelconque des trois premiers modes de réalisations peut être adapté à l'unité 18 de moulage tel que décrite au quatrième mode de réalisation et représentée aux figures 19 et 20.

## Revendications

1. Station (10) de formage de récipients en matériau thermoplastique qui comporte :
- une unité (18) de moulage de récipients, notamment par soufflage de préformes ;
- un premier support (22) de moule et un deuxième support (24) de moule qui sont destinés à porter chacun une partie d'un moule, les supports (22, 24) de moule étant montés mobiles l'un par rapport à l'autre entre une position ouverte dans laquelle ils sont écartés l'un de l'autre, et une position fermée dans laquelle ils sont joints ;
- un dispositif (42) de verrouillage des supports (22, 24) de moule en position fermée qui comporte au moins un organe (52) de verrouillage monté mobile sur le deuxième support (24) de moule entre une position verrouillée dans laquelle il coopère avec au moins une face (45) de blocage du premier support (22) de moule pour empêcher l'ouverture des support (22, 24) de moule et une position déverrouillée dans laquelle l'organe (52) de verrouillage est escamoté par rapport à la face (45) de blocage pour autoriser l'ouverture des supports (22, 24) de moule ;
- un dispositif (62) bistable qui comporte :
-- un premier élément (64) fixe par rapport au deuxième support (24) de moule,
-- un deuxième élément (66) mobile qui est monté mobile sur le deuxième support (24) de moule entre deux positions (P1, P2) extrêmes stables situées de part et d'autre d'une position (P0) intermédiaire d'équilibre instable, et qui est lié en déplacement avec l'organe (52) de verrouillage, l'élément (66) mobile interagissant avec l'élément (64) fixe pour forcer le dispositif (42) de verrouillage vers sa position verrouillée ou vers sa position déverrouillée correspondant à chacune de ses positions (P1, P2) extrêmes stables ;
**caractérisé en ce que** l'élément (66) mobile comporte un premier dipôle magnétique, dit dipôle (68) magnétique mobile, et l'élément (64) fixe comporte au moins un deuxième dipôle magnétique, dit dipôle (70) magnétique fixe, le dipôle (70) magnétique fixe exerçant une force (Fm) magnétique à distance sur le dipôle (68) magnétique mobile pour forcer l'élément (66) mobile vers l'une ou l'autre des positions (P1, P2) extrêmes stables quelle que soit sa position entre ses deux positions (P1, P2) extrêmes stables.

2. Station (10) de formage selon la revendication précédente, **caractérisée en ce que** les déplacements de l'élément (66) mobile sont arrêtés dans ses deux positions (P1, P2) extrêmes stables par des butées (74, 76) mécaniques associées, la force (Fm) de répulsion exercée par chaque dipôle (70) magnétique fixe sur chaque dipôle (68) magnétique mobile étant suffisante pour maintenir l'organe (52) de verrouillage dans sa position verrouillée ou déverrouillée correspondant à l'une ou l'autre des positions (P1, P2) extrêmes stables de l'élément (66) mobile.

3. Station (10) de formage selon l'une quelconque des revendications 1 ou 2, **caractérisée en ce que** l'élément (66) mobile est monté coulissant sur le deuxième support (24) de moule entre ses deux positions (P1, P2) extrêmes stables le long d'une trajectoire rectiligne.

4. Station (10) de formage selon l'une quelconque des revendications 1 à 3, **caractérisée en ce que** l'élément (66) mobile est monté pivotant sur le deuxième support (24) de moule entre ses deux positions (P1, P2) extrêmes stables autour d'un axe (X) de pivotement, le dipôle (68) magnétique mobile étant fixé sur l'élément (66) mobile de manière excentrée par rapport à l'axe (X) de pivotement.

5. Station (10) de formage selon l'une quelconque des revendications précédentes, **caractérisée en ce que** le dipôle (70) magnétique fixe agit par répulsion magnétique sur le dipôle (68) magnétique mobile en exerçant sur lui une force (Fm) de répulsion pour pousser l'élément (66) mobile vers l'une ou l'autre de ses deux positions (P1, P2) extrêmes stables.

6. Station (10) de formage selon l'une quelconque des revendications précédentes, **caractérisée en ce que** chacun des dipôles (68, 70) magnétiques émet constamment un champ magnétique, tel un aimant permanent.

7. Station (10) de formage selon l'une quelconque des revendications précédentes, **caractérisée en ce que** la variation de la force (Fm) de répulsion en fonction de la position de l'élément (66) mobile présente une pente qui relie deux extrema (Max1, Max2) de signes opposés, le au moins un dipôle (70) magnétique fixe étant conçu pour que la norme de la force (Fm) exercée sur l'au moins un dipôle (68) magnétique mobile soit comprise entre 30 N et 100 N, par exemple égale à environ 60 N, dans chacune de ses deux positions (P1, P2) extrêmes stables.

8. Station (10) de formage selon l'une quelconque des revendications précédentes, **caractérisée en ce que** les dipôles (68, 70) magnétiques fixe et mobile sont conçus pour que la norme de la force (Fm) exercée sur l'au moins un dipôle (68) magnétique mobile soit égale à son extremum local (Max1, Max2) dans chacune de ses deux positions (P1, P2) extrêmes stables.

9. Station (10) de formage selon l'une quelconque des revendications précédentes, **caractérisée en ce que** chaque dipôle (70) magnétique fixe présente un axe (M1) polaire orienté orthogonalement à la trajectoire de l'élément (64) fixe, l'un des pôles, dit pôle actif, de chaque dipôle (70) magnétique fixe étant agencé en vis-à-vis de la trajectoire du dipôle (68) magnétique mobile.

10. Station (10) de formage selon l'une quelconque des revendications précédentes, **caractérisée en ce que** l'élément (64) fixe comporte plusieurs dipôles (70) magnétiques fixes, tous les dipôles (70) magnétiques fixes présentant un pôle actif de même polarité.

11. Station (10) de formage selon l'une quelconque des revendications précédentes, **caractérisée en ce que** chaque dipôle (68) magnétique mobile présente un axe (M2) polaire orienté dans la direction de sa trajectoire, chaque dipôle (68) magnétique mobile présentant un pôle dit "pôle de répulsion" qui présente la même polarité que le pôle actif des dipôles (70) magnétiques fixes, les pôles de répulsion passant en vis-à-vis des pôles actifs lorsque l'élément (66) mobile occupe une position intermédiaire entre ses deux positions (P1, P2) extrêmes stables.

12. Station (10) de formage selon l'une quelconque des revendications 1 à 11, **caractérisée en ce que** chaque dipôle (70) magnétique fixe présente un axe (M1) polaire orienté parallèlement à la trajectoire de l'élément (66) mobile.

13. Station (10) de formage selon l'une quelconque des revendications 1 à 11, **caractérisée en ce que** chaque dipôle (68) magnétique mobile présente un axe (M2) polaire orienté orthogonalement à sa trajectoire de manière qu'au moins un pôle de répulsion de chaque dipôle (68) magnétique mobile soit agencé en vis-à-vis d'un pôle actif de même polarité d'un dipôle (70) magnétique fixe lors du déplacement de l'élément (66) mobile entre ses deux positions (P1, P2) extrêmes stables.

14. Station (10) de formage selon la revendication précédente, **caractérisée en ce que** chaque dipôle (68) magnétique mobile présente un axe (M2) polaire orienté parallèlement à sa trajectoire, la polarité du dipôle (68) magnétique mobile étant inversée par rapport à la polarité du dipôle (70) magnétique fixe.

15. Station (10) de formage selon la revendication précédente, **caractérisée en ce que** au moins l'un parmi le dipôle (68) magnétique mobile et le dipôle (70) magnétique fixe présente une forme tubulaire dont l'axe principal coïncide avec son axe (M1, M2) polaire pour recevoir l'autre desdits dipôles (68, 70) magnétiques concentriquement lorsque l'élément (66) mobile occupe sa position d'équilibre instable.

## Patentansprüche

1. Station (10) zum Umformen von Behältern aus thermoplastischem Material, die Folgendes umfasst:
- eine Einheit (18) zum Formen von Behältern, insbesondere durch Blasformen von Vorformlingen;
- einen ersten Formträger (22) und einen zweiten Formträger (24), die dazu bestimmt sind, jeweils einen Teil einer Form zu tragen, wobei die Formträger (22, 24) zwischen einer geöffneten Position, in der sie voneinander beabstandet sind, und einer geschlossenen Position, in der sie zusammengefügt sind, relativ zueinander beweglich montiert sind;
- eine Vorrichtung (42) zum Verriegeln der Formträger (22, 24) in der geschlossenen Position, die mindestens ein Verriegelungsorgan (52) umfasst, das zwischen einer verriegelten Position, in der es mit mindestens einer Sperrfläche (45) des ersten Formträgers (22) zusammenwirkt, um das Öffnen der Formträger (22, 24) zu verhindern, und einer entriegelten Position, in der das Verriegelungsorgan (52) mit Bezug auf die Sperrfläche (45) zurückgezogen ist, um das Öffnen der Formträger (22, 24) zu gestatten, beweglich an dem zweiten Formträger (24) montiert ist;
- eine bistabile Vorrichtung (62), die Folgendes umfasst:
-- ein erstes Element (64), das mit Bezug auf den zweiten Formträger (24) feststehend ist,
-- ein zweites bewegliches Element (66), das zwischen zwei stabilen Endpositionen (P1, P2), die sich zu beiden Seiten einer Zwischenposition (PO) mit instabilem Gleichgewicht befinden, an dem zweiten Formträger (24) beweglich montiert ist und das mit dem Verriegelungsorgan (52) verschiebefest verbunden ist, wobei das bewegliche Element (66) mit dem feststehenden Element (64) interagiert, um die Verriegelungsvorrichtung (42) in ihre verriegelte Position oder in ihre entriegelte Position, die jeder seiner stabilen Endpositionen (P1, P2) entsprechen, zu zwingen;
**dadurch gekennzeichnet, dass** das bewegliche Element (66) einen ersten magnetischen Dipol umfasst, der als beweglicher magnetischer Dipol (68) bezeichnet wird, und das feststehende Element (64) mindestens einen zweiten magnetischen Dipol umfasst, der als feststehender magnetischer Dipol (70) bezeichnet wird, wobei der feststehende magnetische Dipol (70) aus der Entfernung eine magnetische Kraft (Fm) auf den beweglichen magnetischen Dipol (68) ausübt, um das bewegliche Element (66) unabhängig von seiner Position zwischen seinen zwei stabilen Endpositionen (P1, P2) in die eine oder die andere der stabilen Endpositionen (P1, P2) zu zwingen.

2. Umformungsstation (10) nach dem vorhergehenden Anspruch, **dadurch gekennzeichnet, dass** die Verschiebungen des beweglichen Elements (66) durch assoziierte mechanische Anschläge (74, 76) in seinen zwei stabilen Endpositionen (P1, P2) gestoppt werden, wobei die Abstoßungskraft (Fm), die durch jeden feststehenden magnetischen Dipol (70) auf jeden beweglichen magnetischen Dipol (68) ausgeübt wird, ausreicht, um das Verriegelungsorgan (52) in seiner verriegelten oder entriegelten Position, die der einen oder der anderen der stabilen Endpositionen (P1, P2) des beweglichen Elements (66) entsprechen, zu halten.

3. Umformungsstation (10) nach einem beliebigen der Ansprüche 1 oder 2, **dadurch gekennzeichnet, dass** das bewegliche Element (66) zwischen seinen zwei stabilen Endpositionen (P1, P2) entlang einer geradlinigen Bahn gleitend an dem zweiten Formträger (24) montiert ist.

4. Umformungsstation (10) nach einem beliebigen der Ansprüche 1 bis 3, **dadurch gekennzeichnet, dass** das bewegliche Element (66) zwischen seinen zwei stabilen Endpositionen (P1, P2) um eine Schwenkachse (X) schwenkbar an dem zweiten Formträger (24) montiert ist, wobei der bewegliche magnetische Dipol (68) mit Bezug auf die Schwenkachse (X) exzentrisch an dem beweglichen Element (66) angebracht ist.

5. Umformungsstation (10) nach einem beliebigen der vorhergehenden Ansprüche, **dadurch gekennzeichnet, dass** der feststehende magnetische Dipol (70) durch magnetische Abstoßung auf den beweglichen magnetischen Dipol (68) einwirkt und dabei eine Abstoßungskraft (Fm) auf diesen ausübt, um das bewegliche Element (66) in die eine oder die andere seiner zwei stabilen Endpositionen (P1, P2) zu drängen.

6. Umformungsstation (10) nach einem beliebigen der vorhergehenden Ansprüche, **dadurch gekennzeichnet, dass** jeder der magnetischen Dipole (68, 70) dauerhaft ein magnetisches Feld erzeugt, wie ein Permanentmagnet.

7. Umformungsstation (10) nach einem beliebigen der vorhergehenden Ansprüche, **dadurch gekennzeichnet, dass** die Änderung der Abstoßungskraft (Fm) in Abhängigkeit von der Position des beweglichen Elements (66) eine Steigung aufweist, die zwei Maxima (Max1, Max2) mit umgekehrten Vorzeichen verbindet, wobei der mindestens eine feststehende magnetische Dipol (70) dazu ausgelegt ist, dass der Betrag der Kraft (Fm), die auf den mindestens einen beweglichen magnetischen Dipol (68) ausgeübt wird, in jeder seiner zwei stabilen Endpositionen (P1, P2) zwischen 30 N und 100 n liegt, beispielsweise gleich ungefähr 60 N ist.

8. Umformungsstation (10) nach einem beliebigen der vorhergehenden Ansprüche, **dadurch gekennzeichnet, dass** der feststehende und der bewegliche magnetische Dipol (68, 70) dazu ausgelegt sind, dass der Betrag der Kraft (Fm), die auf den mindestens einen beweglichen magnetischen Dipol (68) ausgeübt wird, in jeder seiner zwei stabilen Endpositionen (P1, P2) gleich ihrem lokalen Maximum (Max1, Max2) ist.

9. Umformungsstation (10) nach einem beliebigen der vorhergehenden Ansprüche, **dadurch gekennzeichnet, dass** jeder feststehende magnetische Dipol (70) eine Polarachse (M1) aufweist, die orthogonal zu der Bahn des feststehenden Elements (64) ausgerichtet ist, wobei sich einer der Pole, als aktiver Pol bezeichnet, jedes feststehenden magnetischen Dipols (70) gegenüber der Bahn des beweglichen magnetischen Dipols (68) befindet.

10. Umformungsstation (10) nach einem beliebigen der vorhergehenden Ansprüche, **dadurch gekennzeichnet, dass** das feststehende Element (64) mehrere feststehende magnetische Dipole (70) umfasst, wobei alle feststehenden magnetischen Dipole (70) einen aktiven Pol gleicher Polarität aufweisen.

11. Umformungsstation (10) nach einem beliebigen der vorhergehenden Ansprüche, **dadurch gekennzeichnet, dass** jeder bewegliche magnetische Dipol (68) eine Polarachse (M2) aufweist, die in der Richtung seiner Bahn ausgerichtet ist, wobei jeder bewegliche magnetische Dipol (68) einen Pol aufweist, der als "Abstoßungspol" bezeichnet wird und die gleiche Polarität wie der aktive Pol der feststehenden magnetischen Dipole (70) aufweist, wobei die Abstoßungspole gegenüber den aktiven Polen vorbeiziehen, wenn das bewegliche Element (66) eine Zwischenposition zwischen seinen zwei stabilen Endpositionen (P1, P2) einnimmt.

12. Umformungsstation (10) nach einem beliebigen der Ansprüche 1 bis 11, **dadurch gekennzeichnet, dass** jeder feststehende magnetische Dipol (70) eine Polarachse (M1) aufweist, die parallel zu der Bahn des beweglichen Elements (66) ausgerichtet ist.

13. Umformungsstation (10) nach einem beliebigen der Ansprüche 1 bis 11, **dadurch gekennzeichnet, dass** jeder bewegliche magnetische Dipol (68) eine Polarachse (M2) aufweist, die orthogonal zu seiner Bahn ausgerichtet ist, sodass sich während der Verschiebung des beweglichen Elements (66) zwischen seinen zwei stabilen Endpositionen (P1, P2) mindestens ein Abstoßungspol jedes beweglichen magnetischen Dipols (68) gegenüber einem aktiven Pol gleicher Polarität eines feststehenden magnetischen Dipols (70) befindet.

14. Umformungsstation (10) nach dem vorhergehenden Anspruch, **dadurch gekennzeichnet, dass** jeder bewegliche magnetische Dipol (68) eine Polarachse (M2) aufweist, die parallel zu seiner Bahn ausgerichtet ist, wobei die Polarität des beweglichen magnetischen Dipols (68) in Bezug auf die Polarität des feststehenden magnetischen Dipols (70) umgekehrt ist.

15. Umformungsstation (10) nach dem vorhergehenden Anspruch, **dadurch gekennzeichnet, dass** mindestens einer von dem beweglichen magnetischen Dipol (68) und dem feststehenden magnetischen Dipol (70) eine röhrenförmige Form aufweist, deren Hauptachse mit seiner Polarachse (M1, M2) zusammenfällt, um den anderen von den magnetischen Dipolen (68, 70) konzentrisch aufzunehmen, wenn das bewegliche Element (66) seine instabile Gleichgewichtsposition einnimmt.

## Claims

1. Station (10) for forming thermoplastic containers, which comprises:
- a unit (18) for molding containers, notably by blow-molding preforms:
- a first mold support (22) and a second mold support (24) which are each intended to support part of a mold, the mold supports (22, 24) being mounted with the ability to move one relative to the other between an open position in which they are parted from one another, and a closed position in which they meet;
- a locking device (42) for locking the mold supports (22, 24) in the closed position and which comprises at least one locking member (52) mounted with the ability to move on the second mold support (24) between a locked position in which it collaborates with at least a blocking face (45) of the first mold support (22) so as to prevent the opening of the mold supports (22, 24) and an unlocked position in which the locking member (52) is retracted with respect to the blocking face (45) so as to allow the opening of the mold supports (22, 24):
- a bistable device (62) which comprises:
-- a fixed first element (64) that is fixed with respect to the second mold support (24),
-- a mobile second element (66) which is mounted with the ability to move on the second mold support (24) between two stable extreme positions (P1, P2) situated one on each side of an unstable equilibrium intermediate position (PO), and which is connected in terms of movement to the locking member (52), the mobile element (66) interacting with the fixed element (64) to force the locking device (42) toward its locked position or toward its unlocked position corresponding to each of its stable extreme positions (P1, P2);
**characterized in that** the mobile element (66) comprises a first magnetic dipole, referred to as the mobile magnetic dipole (68), and the fixed element (64) comprises at least a second magnetic dipole, referred to as the fixed magnetic dipole (70), the fixed magnetic dipole (70) applying a magnetic force (Fm) from a distance to the mobile magnetic dipole (68) in order to force the mobile element (66) toward one or other of the stable extreme positions (P1, P2) whatever its position between its two stable extreme positions (P1, P2).

2. Forming station (10) according to the preceding claim, **characterized in that** the movements of the mobile element (66) are halted in its two stable extreme positions (P1, P2) by associated mechanical end stops (74, 76), the repulsion force (Fm) applied by each fixed magnetic dipole (70) to each mobile magnetic dipole (68) being sufficient to keep the locking member (52) in its locked or unlocked position corresponding to one or other of the stable extreme positions (P1, P2) of the mobile element (66).

3. Forming station (10) according to either one of Claims 1 or 2, **characterized in that** the mobile element (66) is mounted with the ability to slide on the second mold support (24) between its two stable extreme positions (P1, P2) along a rectilinear path.

4. Forming station (10) according to any one of Claims 1 to 3, **characterized in that** the mobile element (66) is mounted with the ability to pivot on the second mold support (24) between its two stable extreme positions (P1, P2) about an axis (X) of pivoting, the mobile magnetic dipole (68) being fixed to the mobile element (66) eccentrically with respect to the axis (X) of pivoting.

5. Forming station (10) according to any one of the preceding claims, **characterized in that** the fixed magnetic dipole (70) acts by magnetic repulsion on the mobile magnetic dipole (68) by applying to it a repulsion force (Fm) to push the mobile element (66) toward one or other of its two stable extreme positions (P1, P2).

6. Forming station (10) according to any one of the preceding claims, **characterized in that** each of the magnetic dipoles (68, 70) constantly emits a magnetic field, such as a permanent magnet.

7. Forming station (10) according to any one of the preceding claims, **characterized in that** the variation in the repulsion force (Fm) as a function of the position of the mobile element (66) exhibits a gradient which connects two extrema (Max1, Max2) of opposite signs, the at least one fixed magnetic dipole (70) being designed so that the norm of the force (Fm) applied to the at least one mobile magnetic dipole (68) is comprised between 30 N and 100 N, for example equal to approximately 60 N, in each of its two stable extreme positions (P1, P2).

8. Forming station (10) according to any one of the preceding claims, **characterized in that** the fixed and mobile magnetic dipoles (68, 70) are designed so that the norm of the force (Fm) applied to the at least one mobile magnetic dipole (68) is equal to its local extremum (Max1, Max2) in each of its two stable extreme positions (P1, P2).

9. Forming station (10) according to any one of the preceding claims, **characterized in that** each fixed magnetic dipole (70) has a polar axis (M1) oriented orthogonally to the path of the fixed element (64), one of the poles, referred to as the active pole, of each fixed magnetic dipole (70) being arranged facing the path of the mobile magnetic dipole (68).

10. Forming station (10) according to any one of the preceding claims, **characterized in that** the fixed element (64) comprises a plurality of fixed magnetic dipoles (70), all the fixed magnetic dipoles (70) featuring an active pole of the same polarity.

11. Forming station (10) according to any one of the preceding claims, **characterized in that** each mobile magnetic dipole (68) has a polar axis (M2) oriented in the direction of its path, each mobile magnetic dipole (68) featuring a pole referred to as the "repulsion pole" which has the same polarity as the active pole of the fixed magnetic dipoles (70), the repulsion poles passing past the active poles when the mobile element (66) is occupying an intermediate position between its two stable extreme positions (P1, P2).

12. Forming station (10) according to any one of Claims 1 to 11, **characterized in that** each fixed magnetic dipole (70) has a polar axis (M1) oriented parallel to the path of the mobile element (66).

13. Forming station (10) according to any one of Claims 1 to 11, **characterized in that** each mobile magnetic dipole (68) has a polar axis (M2) oriented orthogonally to its path so that at least one repulsion pole of each mobile magnetic dipole (68) is arranged facing an active pole of the same polarity of a fixed magnetic dipole (70) as the mobile element (66) moves between its two stable extreme positions (P1, P2).

14. Forming station (10) according to the preceding claim, **characterized in that** each mobile magnetic dipole (68) has a polar axis (M2) oriented parallel to its path, the polarity of the mobile magnetic dipole (68) being the opposite of the polarity of the fixed magnetic dipole (70).

15. Forming station (10) according to the preceding claim, **characterized in that**, of the mobile magnetic dipole (68) and the fixed magnetic dipole (70), at least one has a tubular shape with its main axis coinciding with its polar axis (M1, M2) so as to accept the other of said magnetic dipoles (68, 70) concentrically when the mobile element (66) is occupying its unstable equilibrium position.
